(19) Europäisches Patentamt
European Patent Office
Office européen des brevets

(11) **EP 3 767 730 B1**

(12) **EUROPEAN PATENT SPECIFICATION**

(45) Date of publication and mention of the grant of the patent:
**27.04.2022 Bulletin 2022/17**

(21) Application number: **18909696.9**

(22) Date of filing: **21.12.2018**

(51) International Patent Classification (IPC):
**H01M 10/0565** (2010.01)     **C08F 214/22** (2006.01)
**H01M 6/22** (2006.01)     **H01M 10/052** (2010.01)
**H01M 10/0569** (2010.01)

(52) Cooperative Patent Classification (CPC):
**H01M 10/0569; C08F 214/22; H01M 6/22;**
**H01M 10/052; H01M 10/0565;** H01M 2300/0025;
H01M 2300/0037; Y02E 60/10

(86) International application number:
**PCT/JP2018/047361**

(87) International publication number:
**WO 2019/176223 (19.09.2019 Gazette 2019/38)**

(54) **POLYMER GEL ELECTROLYTE FOR NONAQUEOUS ELECTROLYTE SECONDARY BATTERY, AND NONAQUEOUS ELECTROLYTE SECONDARY BATTERY**

POLYMERGELEKTROLYT FÜR SEKUNDÄRBATTERIE MIT WASSERFREIEM ELEKTROLYT UND SEKUNDÄRBATTERIE MIT WASSERFREIEM ELEKTROLYT

ÉLECTROLYTE POLYMÈRE EN GEL POUR BATTERIE SECONDAIRE À ÉLECTROLYTIQUE NON AQUEUX ET BATTERIE SECONDAIRE À ÉLECTROLYTE NON AQUEUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.03.2018 JP 2018046760**

(43) Date of publication of application:
**20.01.2021 Bulletin 2021/03**

(73) Proprietor: **Kureha Corporation**
**Chuo-ku**
**Tokyo 103-8552 (JP)**

(72) Inventors:
• **TAJIMA, Saori**
**Tokyo 103-8552 (JP)**
• **IKEDA, Takuya**
**Tokyo 103-8552 (JP)**

• **WATANABE, Keisuke**
**Tokyo 103-8552 (JP)**
• **KOBAYASHI, Shota**
**Tokyo 103-8552 (JP)**

(74) Representative: **Novagraaf Group**
**Chemin de l'Echo 3**
**1213 Onex/ Geneva (CH)**

(56) References cited:
WO-A1-99/28916          WO-A1-2017/154448
JP-A- H 026 507          JP-A- S63 238 115
JP-A- 2001 217 010          JP-A- 2002 503 734
JP-A- 2003 342 328          JP-A- 2010 084 149
JP-A- 2014 065 911          US-A- 6 077 624
US-A1- 2004 224 233          US-A1- 2009 111 012
US-A1- 2017 125 868

**Description**

Technical Field

The present invention relates to a polymer gel electrolyte for a non-aqueous electrolyte secondary battery and a non-aqueous electrolyte secondary battery.

Background Art

The non-aqueous electrolyte secondary battery, such as a lithium-ion secondary battery, can achieve both high capacity and small size, and therefore has attracted attention as a power source for mobile electronic devices such as smartphones or electric vehicles. As the electrolyte of the non-aqueous electrolyte secondary battery, a non-aqueous electrolyte solution in which a lithium salt is dissolved in a water insoluble organic solvent is used.

In recent years, as an electrolyte for a non-aqueous electrolyte secondary battery, a polymer gel electrolyte has been developed in which a non-aqueous electrolyte solution is impregnated into a polymer in order to suppress leakage of the non-aqueous electrolyte solution or the like. As a polymer used in the polymer gel electrolyte, a vinylidene fluoride polymer (hereinafter, the term "vinylidene fluoride polymer" includes both a vinylidene fluoride homopolymer and a copolymer) is preferably used due to high electrical stability.

Patent Document 1 discloses that a vinylidene fluoride polymer crosslinked by a crosslinking agent can be used to increase the mechanical strength and the like of the polymer gel electrolyte described above. Furthermore, Patent Document 2 discloses that by adjusting a degree of crosslinking (gel fraction) of the vinylidene fluoride polymer crosslinked by a crosslinking agent, it is possible to increase the ionic conductivity, high temperature stability, and adhesion to the electrodes when using the vinylidene fluoride polymer as a polymer gel electrolyte.

Furthermore, Patent Document 3 discloses that a copolymer obtained by copolymerizing fluoroolefin such as chlorotrifluoroethylene with a crosslinkable monomer such as t-butylallyl peroxide can increase the ionic conductivity and heat resistance of a polymer gel electrolyte containing the copolymer.

Furthermore, Patent Document 4 discloses that a vinylidene fluoride homopolymer or a copolymer of vinylidene fluoride and hexafluoropropylene is crosslinked by irradiation with an electron beam, thereby a polymer gel electrolyte containing the copolymer can have an increased ionic conductivity.

EP 3 429 017 A1 describes a gel electrolyte that has a lower concentration of matrix polymer and that can maintain a gel state. The gel electrolyte contains a non-aqueous electrolyte solution in which a lithium-containing electrolyte is dissolved in a non-aqueous solvent and a matrix polymer, the matrix polymer being a copolymer containing a vinylidene fluoride unit and a fluorine atom-containing monomer unit as a repeating unit, and the crystallization temperature TC of the matrix polymer being within a range that satisfies the following relationship (I) relative to the Concentration C (mass%) of the matrix polymer included in the gel electrolyte

$$T_C \geq 110 - C \text{ (I)},$$

where $0.1 \leq C \leq 30$.

Citation List

Patent Document

Patent Document 1: US 5,429,891
Patent Document 2: JP 11-3717 A
Patent Document 3: JP 11-96832 A
Patent Document 4: JP 9-302134 A

Summary of Invention

Technical Problem

As disclosed in Patent Documents 1 to 4, it has been known that a crosslinked vinylidene fluoride polymer can be used for a polymer gel electrolyte. However, although an object of the polymer gel electrolyte is mainly to increase the liquid retention of a non-aqueous electrolyte solution and suppress leakage of the non-aqueous electrolyte solution, in the crosslinked vinylidene fluoride polymers disclosed in these documents, it cannot be found that the liquid retention for the non-aqueous electrolyte solution was sufficiently enhanced.

In addition, according to the findings of the present inventors, it is presumed that the liquid retention of the polymer gel electrolyte using a vinylidene fluoride copolymer is dependent on the mechanical strength of the polymer gel electrolyte, the amount of network spaces that hold the non-aqueous electrolyte solution formed by a polymer chain, and the solubility and swelling properties of the vinylidene fluoride copolymer in the electrolyte, and in practical application, processability is an important factor. As for the crosslinked vinylidene fluoride polymers disclosed in Patent Documents 1 to 4, for example, Patent Document 2 discloses that the crosslinked vinylidene fluoride polymer is insoluble in a solvent, Patent Document 4 discloses that formation of a crosslinked structure in the vinylidene fluoride polymer is confirmed by the fact that it is not uniformly dissolved in the organic solvent, and therefore, the solubility in the non-aqueous electrolyte solution is not excessively high. For this reason, these vinylidene fluoride polymers cannot introduce a sufficient amount of non-aqueous electrolyte solution even though an attempt to impregnate the non-aqueous electrolyte solution is made after crosslinking, and in practical application, as disclosed in Patent Document 3, first, an uncrosslinked copolymer and the non-aqueous electrolyte solution are mixed and molded into a shape of a non-aqueous electrolyte, and then the copolymer is crosslinked by a method such as electron beam irradiation. However, in such a method, although the mechanical strength is improved by crosslinking, it is difficult to obtain a non-aqueous electrolyte having a desired shape because the shape of the copolymer changes during crosslinking. From the viewpoint of eliminating such problems, it is desirable to form a solution, in which a crosslinked vinylidene fluoride polymer is dissolved in a non-aqueous electrolyte solution, into a shape of a non-aqueous electrolyte, and for that purpose, it is desirable that the crosslinked vinylidene fluoride polymer used for the polymer gel electrolyte has high solubility in the non-aqueous electrolyte solution even after crosslinking.

The present invention has been made in view of the above problems, and an object thereof is to provide a polymer gel electrolyte which contains a crosslinked vinylidene fluoride polymer, and is excellent in liquid retention of a non-aqueous electrolyte solution, in which the vinylidene fluoride polymer used has high solubility in the non-aqueous electrolyte solution even after crosslinking, and to provide a non-aqueous electrolyte secondary battery containing the polymer gel electrolyte.

Solution to Problem

In order to solve the above problem, the polymer gel electrolyte of the present invention contains a vinylidene fluoride copolymer having a first constituent unit derived from vinylidene fluoride and a second constituent unit derived from a crosslinkable monomer, and a non-aqueous electrolyte solution. In the vinylidene fluoride copolymer, the second constituent unit is a constituent unit derived from a crosslinkable monomer in which all substitutable hydrogens in the molecule are substituted with fluorine, and a content of the second constituent unit is 0.1% by mass or more and less than 5% by mass relative to the total mass of the vinylidene fluoride copolymer. Furthermore, the second constituent unit is a constituent unit that has two or more polymerizable functional groups and a linking group connecting the functional groups to each other, the linking group having a valence that is the same as the number of the functional groups.

Further, the non-aqueous electrolyte secondary battery of the present invention for solving the above-mentioned problems includes a positive electrode, a negative electrode, and a polymer gel electrolyte disposed between the positive electrode and the negative electrode.

Advantageous Effects of Invention

According to the present invention, there is provided a polymer gel electrolyte which contains a crosslinked vinylidene fluoride polymer, and is excellent in liquid retention of a non-aqueous electrolyte solution, in which the vinylidene fluoride polymer used has high solubility in the non-aqueous electrolyte solution even after crosslinking, and to provide a non-aqueous electrolyte secondary battery containing the polymer gel electrolyte.

Description of Embodiments

As a result of intensive studies on the above problems, the present inventors have found that a vinylidene fluoride copolymer (hereinafter, also referred to as "vinylidene fluoride copolymer (A)"), including a first constituent unit derived from vinylidene fluoride and a second constituent unit derived from a crosslinkable monomer in which all substitutable hydrogens in the molecule are substituted with fluorine, has high solubility in a non-aqueous electrolyte and can further enhance liquid retention for the non-aqueous electrolyte, and have conducted further studies and completed the present invention.

The vinylidene fluoride copolymer (A) has a crosslinked structure formed by the crosslinkable monomer described above, and thus has a wide network space of a polymer chain capable of retaining a non-aqueous electrolyte solution. In addition, in the vinylidene fluoride copolymer (A), the vinylidene fluoride is copolymerized with a crosslinkable monomer in which all substitutable hydrogens in the molecule are substituted with fluorine. In the polymerization of the vinylidene fluoride copolymer, generally, vinylidene fluoride radical is generated by an initiator and the chain length of the polymer is extended by a chain growth reaction. According to the findings of the present inventors, the hydrogen abstraction ability of the vinylidene fluoride radical generated during the polymerization is extremely high, and when there is a chemical species having a large number of C-H bonds in a polymerization system, the polymerization reaction tends to stop due to the hydrogen abstraction reaction of the vinylidene fluoride radical. In contrast, in the crosslinkable monomer described above, since all substitutable hydrogens in the molecule are substituted with fluorine and it has no C-H bond, a hydrogen abstraction reaction due to the vinylidene fluoride radical does not occur, and thus the polymerization is sufficiently promoted even when the chain of the linking group connecting the polymerizable functional groups is extended, compared to the crosslinkable monomer that is not substituted with fluorine. Therefore, it is considered that the vinylidene fluoride copolymer (A) has a carbon chain of sufficient length and a crosslinked structure, and the network space of polymer chains capable of retaining the non-aqueous electrolyte solution becomes increasingly wider. For these reasons, it is considered that the liquid retention for the non-aqueous electrolyte solution is enhanced in the polymer gel electrolyte having the vinylidene fluoride copolymer (A).

On the other hand, the content of the second constituent unit derived from the crosslinkable monomer in the vinylidene fluoride copolymer (A) is 0.1% by mass or more and less than 5% by mass. According to the findings of the present inventors, the constituent unit derived from a crosslinkable monomer in which all substitutable hydrogens in the molecule are substituted with fluorine, is less miscible with the non-aqueous electrolyte solution, and thus the solubility of the copolymer after crosslinking in the non-aqueous electrolyte solution may be deteriorated. In general, a greater amount of crosslinking in polymers lower the solubility in the solvent. The solubility/swelling properties are estimated to be factors affecting liquid retention, and when the solubility in the non-aqueous electrolyte solution is deteriorated, the retention of the non-aqueous electrolyte solution is also difficult to increase. In contrast, in the vinylidene fluoride copolymer (A), it is considered that by setting the content of the second constituent unit to 0.1% by mass or more and less than 5% by mass, it is possible to suppress the reduction of the solubility in the non-aqueous electrolyte solution due to the excessive amount of the second constituent unit, and the retention of the non-aqueous electrolyte solution can be enhanced by the carbon chain of sufficient length and the crosslinked structure.

## 1. Polymer gel electrolyte

An embodiment of the present invention based on the above findings relates to a polymer gel electrolyte containing a vinylidene fluoride copolymer (vinylidene fluoride copolymer (A)) having a first constituent unit derived from vinylidene fluoride and a second constituent unit derived from a crosslinkable monomer in which all substitutable hydrogens in the molecule are substituted with fluorine, and a non-aqueous electrolyte solution.

The content of the vinylidene fluoride copolymer (A) relative to the total mass of the polymer gel electrolyte is preferably 0.1% by mass or greater and 30% by mass or less, more preferably 0.5% by mass or greater and 20% by mass or less, and even more preferably 1.0% by mass or greater and 15% by mass or less.

The content of the non-aqueous electrolyte solution relative to the total mass of the polymer gel electrolyte is preferably 70% by mass or greater and 99.9% by mass or less, more preferably 80% by mass or greater and 99.5% by mass or less, and even more preferably 85% by mass or greater and 99% by mass or less.

## 1-1. Vinylidene fluoride copolymer (A)

The vinylidene fluoride copolymer (A) is a copolymer having a first constituent unit derived from vinylidene fluoride and a second constituent unit derived from a crosslinkable monomer in which all substitutable hydrogens in the molecule are substituted with fluorine. The vinylidene fluoride copolymer (A) may have other constituent units in addition to the first constituent unit or the second constituent unit.

## 1-1-1. First constituent unit

The first constituent unit is a constituent unit derived from vinylidene fluoride.

The content of the first constituent unit relative to the total mass of the vinylidene fluoride copolymer (A) is preferably 50% by mass or greater and 98.5% by mass or less, more preferably 80% by mass or greater and 98.5% by mass or less, even more preferably 85% by mass or greater and 98.5% by mass or less, and particularly preferably 87% by mass or greater and 98.5% by mass or less. The content of the first constituent unit in the vinylidene fluoride copolymer (A) can be adjusted to the range described above by adjusting the proportion of vinylidene fluoride in the monomer charged as a raw material. In addition, the proportion of the content of the first constituent unit in the vinylidene fluoride copolymer (A) can be determined by a known measurement method such as $^1$H-NMR and infrared spectroscopy.

1-1-2. Second constituent unit

The second constituent unit is a constituent unit derived from a crosslinkable monomer in which all substitutable hydrogens in the molecule are substituted with fluorine. The crosslinkable monomers may be used alone or in combination of two or more types.

According to the findings of the present inventors, when the crosslinkable monomer in which all substitutable hydrogens in the molecule are substituted with fluorine is copolymerized with vinylidene fluoride, a carbon chain of sufficient length for the linking group can be provided, and a vinylidene fluoride copolymer having a wider network space capable of retaining the non-aqueous electrolyte solution can be synthesized.

The crosslinkable monomer may be monomers that are copolymerizable with the vinylidene fluoride and are polymerizable (crosslinkable) with each other. The crosslinkable monomer is a compound having two or more polymerizable functional groups and a linking group having the same valence as the number of functional groups connected to each other. The crosslinkable monomer is preferably a compound having two polymerizable functional groups and a divalent linking group that links the two polymerizable functional groups.

The polymerizable functional group is not particularly limited, and examples thereof include a vinyl group represented by CF2=CF-, in which all hydrogen atoms are substituted with fluorine atoms, and a functional group represented by RR'C=CR"-CO- (where R, R', and R" independently represent a fluorine atom or a linear or branched perfluoroalkyl group having from 1 to 5 carbon atoms) such as a (meth)acryloyl group in which all hydrogen atoms are substituted with fluorine atoms. From the viewpoint of high reactivity, a vinyl group in which all hydrogen atoms are substituted with fluorine atoms and a (meth)acryloyl group in which all hydrogen atoms are substituted with fluorine atoms are preferable, and a (meth)acryloyl group

The number of atoms of the linking group when the polymerizable functional groups are connected at the shortest distance can be 2 or greater and 10 or less, and preferably 3 or greater and 8 or less, and can be, for example, a linear, branched, or cyclic perfluoroalkyl group. The number of atoms of 2 or greater is preferable because the network space formed by the polymer chain capable of retaining the non-aqueous electrolyte solution becomes wider. In addition, from the viewpoint of suppressing the reduction in the number of crosslinked structures formed by reacting the polymerizable functional groups in the same crosslinkable monomer, the number of atoms is preferably not too large, and preferably 10 or less.

Moreover, the linking group can include a heteroatom. Examples of the heteroatom include an oxygen atom, a sulfur atom, a nitrogen atom, and a phosphorus atom. The heteroatom is preferably an oxygen atom because an oxygen atom normally does not change properties, such as high electrical stability, of a vinylidene fluoride polymer. A position at which the heteroatom is included is not particularly limited, and is preferably an etheric oxygen atom in which oxygen atoms are present between carbon atoms constituting the carbon chain. The heteroatom may be disposed in the middle of the carbon chain, or may be disposed at a position at which the end of the carbon chain is connected to the polymerizable group. When the linking group contains a heteroatom, the chain length of the linking group is made longer, and it is possible to synthesize a vinylidene fluoride copolymer having higher retention of the non-aqueous electrolyte solution.

Examples of the crosslinkable monomer in which the linking group has a heteroatom include compounds represented by $CF_2=CFO\text{-}Rf_1\text{-}OCF=CF_2$ and $CF_2=CFO\text{-}Rf_2\text{-}CF=CF_2$ (Rfi represents a fluoroalkylene group having 1 to 8 carbon atoms which may contain an etheric oxygen atom, and $Rf_2$ represents a single bond or a fluoroalkylene group having 1 to 8 carbon atoms which may contain an etheric oxygen atom). Specific examples of these compounds include the following compounds:

$CF_2=CFOCF=CF_2$
$CF_2=CFOCF_2OCF=CF_2$
$CF_2=CFO(CF_2)_2OCF=CF_2$
$CF_2=CFO(CF_2)_3OCF=CF_2$
$CF_2=CFO(CF_2)_4OCF=CF_2$
$CF_2=CFO(CF_2)_5OCF=CF_2$
$CF_2=CFO(CF_2)_6OCF=CF_2$
$CF_2=CFOCF_2OCF(CF_3)CF_2OCF=CF_2$
$CF_2=CFO(CF_2)_2OCF(CF_3)CF_2OCF=CF_2$
$CF_2=CFO(CF_2)_3OCF(CF_3)CF_2OCF=CF_2$
$CF_2=CFOCF_2CF(CF_3)O(CF_2)_2OCF(CF_3)CF_2OCF=CF_2$
$CF_2=CFOCF_2CF(CF_3)O(CF_2)_3OCF(CF_3)CF_2OCF=CF_2$
$CF_2=CFOCF_2CF=CF_2$

$$CF_2=CFO(CF_2)_2CF=CF_2$$
$$CF_2=CFO(CF_2)_3CF=CF_2$$

Among them, perfluorodivinyl ether represented by $CF_2=CFO-Rf_1-OCF=CF_2$ is preferable from the viewpoint of high reactivity.

The content of the second constituent unit relative to the total mass of the vinylidene fluoride copolymer (A) is 0.1% by mass or more and less than 5% by mass, preferably 0.1% by mass or greater and 4% by mass or less, more preferably 0.1% by mass or greater and 3% by mass or less, even still more preferably 0.2% by mass or greater and 2% by mass or less, and particularly preferably 0.3% by mass or greater and 1.5% by mass or less. In particular, when the content of the second constituent unit is less than 5% by mass, the solubility of the crosslinked vinylidene fluoride copolymer (A) in the non-aqueous electrolyte solution is enhanced, and thus it is possible to sufficiently impregnate the non-aqueous electrolyte solution even after crosslinking of the vinylidene fluoride copolymer (A).

The content of the second constituent unit in the vinylidene fluoride copolymer (A) can be adjusted to the range described above by adjusting the proportion of the crosslinkable monomer in the monomer charged as a raw material. In addition, the proportion of the content of the second constituent unit in the vinylidene fluoride copolymer (A) can be determined by a known measurement method such as $^1$H-NMR and infrared spectroscopy.

1-1-3. Other constituent units

The vinylidene fluoride copolymer (A) may have other constituent units in addition to the first constituent unit and the second constituent unit. When the vinylidene fluoride copolymer (A) has these constituent units, it may have only one type or two or more types.

For example, the vinylidene fluoride copolymer (A) may have a constituent unit derived from a fluorine-containing alkyl vinyl compound (hereinafter, also simply referred to as "fluorinated monomer"), other than vinylidene fluoride, which is copolymerizable with vinylidene fluoride from the viewpoint of controlling the crystallinity that affects the swelling properties. Examples of the fluorinated monomer include vinyl fluoride, trifluoroethylene, tetrafluoroethylene, chlorotrifluoroethylene, and hexafluoropropylene. Among them, from the viewpoint of making control of crystallinity easier, tetrafluoroethylene, chlorotrifluoroethylene, and hexafluoropropylene are preferable, and hexafluoropropylene is more preferable.

The content of the constituent unit derived from the fluorinated monomer in the vinylidene fluoride copolymer (A) is preferably 1% by mass or greater and less than 20% by mass, more preferably 2% by mass or more and 15% by mass or less, and even more preferably 3% by mass or greater and 8% by mass or less, relative to the total mass of the vinylidene fluoride copolymer (A).

Furthermore, the vinylidene fluoride copolymer (A) may have a constituent unit derived from (meth)acrylic acid, a (meth)acrylic acid ester having a terminal carboxy group, an unsaturated dibasic acid or an unsaturated dibasic acid monoester from the viewpoint of further increasing the adhesive strength to the surface of an electrode by imparting polarity to the copolymer. Examples of the (meth)acrylic acid ester having a terminal carboxy group include 2-carboxyethyl acrylate, 2-carboxyethyl methacrylate, acryloyloxyethyl succinic acid, methacryloyloxyethyl succinic acid, acryloyloxyethyl phthalic acid, and methacryloyloxyethyl phthalic acid. The unsaturated dibasic acid is unsaturated dicarboxylic acid or derivative thereof, and in particular, can be compounds with two carboxyl groups bonded by a linear or branched unsaturated alkylene group having from 1 to 6 carbon atoms. Examples of the unsaturated dibasic acid include maleic acid, fumaric acid, itaconic acid, and citraconic acid. The unsaturated dibasic acid monoester is a monoester compound derived from the unsaturated dibasic acid. Examples of the unsaturated dibasic acid monoester include maleic acid monomethyl ester, maleic acid monoethyl ester, citraconic acid monomethyl ester, and citraconic acid monoethyl ester.

Further, the vinylidene fluoride copolymer (A) may have a constituent unit derived from a fluorine-containing polymerizable monomer other than those described above, including trifluoromethyl acrylate, vinyl trifluoromethyl ether, and trifluoroethylene.

The content of the constituent unit derived from the above (meth)acrylic acid, (meth)acrylic acid ester having a terminal carboxy group, unsaturated dibasic acid, unsaturated dibasic acid monoester or fluorine-containing polymerizable monomer in the vinylidene fluoride copolymer (A) can be optionally set within such a range that the solubility of the vinylidene fluoride copolymer (A) in a non-aqueous electrolyte solution and the liquid retention for a non-aqueous electrolyte solution when used as a polymer gel electrolyte are not significantly reduced.

1-1-4. Physical properties and the like

A weight average molecular weight of the vinylidene fluoride copolymer (A) is not particularly limited, and can be set to be 150000 or greater and 2500000 or less, preferably 200000 or greater and 2000000 or less, and more preferably 300000 or greater and 1500000 or less. In a case where it is less than 150000, gel formation becomes difficult;

on the other hand, in order to secure sufficient solubility in the non-aqueous electrolyte solution, the average molecular weight of the vinylidene fluoride copolymer (A) is preferably 2500000 or less.

The weight average molecular weight can be a value determined based on styrene calibration as measured by known gel permeation chromatography (GPC).

In addition, in the vinylidene fluoride copolymer (A), a transparency of a mixed solution prepared by adding the vinylidene fluoride copolymer (A) in an amount of 10% by mass relative to the non-aqueous electrolyte solution is preferably 10 degrees or higher, and more preferably 15 degrees or higher, and still more preferably 20 degrees or higher. The temperature at which the mixed solution is prepared can be appropriately selected in a range of room temperature or higher and heating reflux temperature or lower of the solvent so as to minimize the amount of undissolved substances. When the transparency is 20 degrees or higher, the vinylidene fluoride copolymer (A) after crosslinking can be dissolved in the non-aqueous electrolyte and then molded into the shape of the polymer gel electrolyte, and thus it is possible to produce the polymer gel electrolyte with higher dimensional accuracy.

The transparency can be measured with reference to a transparency test described in JIS K0102 (2016), and the higher the transparency, the more transparent. In the mixed solution obtained by adding the vinylidene fluoride copolymer (A) to the non-aqueous electrolyte solution, the better the vinylidene fluoride copolymer (A) is dissolved, the more transparent it becomes, and therefore, the transparency can be used as an index of the solubility.

1-1-5. Method for synthesizing vinylidene fluoride copolymer (A)

The vinylidene fluoride copolymer (A) can be synthesized by copolymerizing vinylidene fluoride and a crosslinkable monomer by a known polymerization method including an emulsion polymerization method and a suspension polymerization method.

When the vinylidene fluoride copolymer (A) contains a constituent unit derived from a monomer other than vinylidene fluoride and a crosslinkable monomer, such as the above-mentioned fluorinated monomer, (meth)acrylic acid, (meth)acrylic acid ester having a terminal carboxy group, unsaturated dibasic acid, unsaturated dibasic acid monoester, and a fluorine-containing polymerizable monomer, these monomers may be copolymerized during the above polymerization.

1-1-5-1. Emulsion polymerization method

In the emulsion polymerization method, the monomers are polymerized in a polymerization solution including a liquid medium in which each of the monomers is hardly soluble, a polymerization initiator soluble in the liquid medium, and an emulsifier.

In the above liquid medium, the above-mentioned monomers may be hardly soluble. Since each of the above-mentioned monomers is hardly soluble in water, the liquid medium is preferably water.

The emulsifier may be any one that can form a micelle of each of the monomers in the liquid medium, and can stably disperse a polymer synthesized by an emulsion polymerization method in the liquid medium, and it can be appropriately selected from known surfactants and used. The emulsifier may be a surfactant typically used in the synthesis of a vinylidene fluoride copolymer, and can be, for example, a perfluorinated surfactant, a partially fluorinated surfactant, and a non-fluorinated surfactant. Among the surfactants, perfluoroalkyl sulfonic acid and a salt thereof, perfluoroalkyl carboxylic acid and a salt thereof, and a fluorine-based surfactant having a fluorocarbon chain or a fluoropolyether chain are preferable, and perfluoroalkyl carboxylic acid and a salt thereof are more preferable.

The polymerization initiator is a polymerization initiator that is soluble in the liquid medium, and can be, for example, a water-soluble peroxide, a water-soluble azo-based compound, a redox initiator system, or the like. Examples of the water-soluble peroxide include ammonium persulfate and potassium persulfate. Examples of the water-soluble azo compound include 2,2'-azobis-isobutyronitrile (AIBN) and 2,2'-azobis-2-methylbutyronitrile (AMBN). Examples of the redox initiator system include ascorbic acid-hydrogen peroxide. Among them, the polymerization initiator is preferably a water-soluble peroxide.

Note that the emulsion polymerization method may be a soap-free emulsion polymerization method or a mini-emulsion polymerization method.

In the soap-free emulsion polymerization method, it is preferable to use, as the emulsifier, a reactive emulsifier, which is a substance having a polymerizable double bond in the molecule and acting as an emulsifier. The reactive emulsifier forms the micelles in the system at the beginning of the polymerization; however, as the polymerization proceeds, the reactive emulsifier is used as a monomer in the polymerization reaction and consumed, and thus it hardly exists in a free state in the finally obtained reaction system. Therefore, the reactive emulsifier is unlikely to bleed out to the particle surface of the obtained polymer.

Examples of the reactive emulsifier include polyoxyalkylene alkenyl ether, sodium alkylallyl sulfosuccinate, methacryloyloxy polyoxypropylene sulfate sodium salt, and alkoxy polyethylene glycol methacrylate.

In addition, in a case where the monomers are dispersed in the liquid medium without a reactive emulsifier, the soap-free polymerization can be carried out without using a reactive emulsifier.

In the mini-emulsion polymerization method, a strong shearing force is applied using an ultrasonic oscillator or the like to miniaturize the micelles to a submicron size, and then polymerization is performed. At this time, a known hydrophobe is added to the mixed solution to stabilize the micronized micelles. In the mini-emulsion polymerization method, typically, a polymerization reaction occurs only inside each of the micelles, and each of the micelles becomes fine particles of the polymer, so that it is easy to control the particle size and particle size distribution of the obtained fine particles of the polymer.

1-1-5-2. Suspension polymerization method

In the suspension polymerization method, a monomer dispersion obtained by dissolving an oil-soluble polymerization initiator in each of the monomers is heated while being mechanically stirred in water containing a suspending agent, a chain transfer agent, a stabilizer, and a dispersant, and therefore, a polymerization reaction is caused in the droplets of the suspended monomer while the above monomer is suspended and dispersed. In the suspension polymerization method, typically, a polymerization reaction occurs only inside each of the droplets of the monomers, and each of the droplets of the monomers becomes fine particles of the polymer, so that it is easy to control the particle size and particle size distribution of the obtained fine particles of the polymer.

Examples of the polymerization initiator include diisopropyl peroxydicarbonate, dinormal propyl peroxydicarbonate, di-normal heptafluoropropyl peroxydicarbonate, diisopropyl peroxydicarbonate, isobutyryl peroxide, di(chlorofluoroacyl)peroxide, di(perfluoroacyl)peroxide, and t-butyl peroxypivalate.

Examples of the suspending agent include methylcellulose, hydroxyethyl cellulose, hydroxypropyl cellulose, hydroxypropyl methylcellulose, partially saponified polyvinyl acetate, and an acrylic polymer.

Examples of the chain transfer agent include ethyl acetate, methyl acetate, diethyl carbonate, acetone, ethanol, n-propanol, acetaldehyde, propyl aldehyde, ethyl propionate, and carbon tetrachloride.

1-2. Non-aqueous electrolyte solution

The non-aqueous electrolyte solution is an electrolyte solution in which an electrolyte containing lithium atoms, sodium atoms, and the like is dissolved in a non-aqueous solvent. These electrolytes may be used alone or in combination of two or more types.

Examples of the electrolyte containing lithium atoms include known lithium salts such as $LiPF_6$, $LiAsF_6$, $LiClO_4$, $LiBF_4$, LiCl, LiBr, $LiCH_3SO_3$, $LiCF_3SO_3$, $LiN(CF_3SO_2)_2$, and $LiC(CF_3SO_2)_3$. Among them, $LiPF_6$, $LiAsF_6$, $LiClO_4$, $LiBF_4$, $LiCH_3SO_3$, $LiCF_3SO_3$, $LiN(CF_3SO_2)_2$, and $LiC(CF_3SO_2)_3$ are more preferable. The concentration of the lithium salt in the non-aqueous electrolyte solution is preferably 0.1 $mol/dm^3$ or greater and 5 $mol/dm^3$ or less, and more preferably 0.5 $mol/dm^3$ or greater and 2 $mol/dm^3$ or less.

Examples of electrolyte containing sodium atoms include $NaPF_6$ and NaTFSA.

Examples of the non-aqueous solvent include ethylene carbonate, propylene carbonate, dimethyl carbonate, ethyl methyl carbonate, diethyl carbonate, dipropyl carbonate, methyl propyl carbonate, ethyl propyl carbonate, ethyl butyl carbonate, $\gamma$-butyrolactone, 1,2-dimethoxyethane, 1,2-diethoxyethane, methyl propionate, and ethyl propionate. These non-aqueous solvents may be used alone or in combination of two or more types. Among them, propylene carbonate, ethylene carbonate, dimethyl carbonate, diethyl carbonate, and methyl ethyl carbonate are preferable from the viewpoint that the solubility of the vinylidene fluoride copolymer (A) is particularly high.

1-3. Method for producing polymer gel electrolyte

The polymer gel electrolyte can be produced by mixing the vinylidene fluoride copolymer (A) with the non-aqueous electrolyte solution and then molding the mixture into a shape of the polymer gel electrolyte. The vinylidene fluoride copolymer (A), despite being cross-linked, has a sufficiently high solubility in the non-aqueous electrolyte solution, and thus the polymer gel electrolyte can be produced without a crosslinking step such as irradiation with an electron beam after mixing.

The mixing is preferably performed under heating from the viewpoint of increasing the solubility of the vinylidene fluoride copolymer (A) in the non-aqueous electrolyte solution. The heating temperature at this time is preferably 40°C or higher and 150°C or lower.

The amount of the vinylidene fluoride copolymer (A) mixed at this time is preferably 0.1% by mass or greater and 30% by mass or less, more preferably 0.5% by mass or greater and 20% by mass or less, and even more preferably 1.0% by mass or greater and 15% by mass or less, relative to the total amount of the vinylidene fluoride copolymer (A) and the non-aqueous electrolyte.

In addition, the amount of the non-aqueous electrolyte solution mixed at this time is preferably 70% by mass or greater and 99.9% by mass or less, more preferably 80% by mass or more and 99.5% by mass or less, and even more preferably is 85% by mass or greater and 99% by mass or less relative to the total amount of the vinylidene fluoride copolymer (A) and the non-aqueous electrolyte.

In the above mixing, in addition to the vinylidene fluoride copolymer (A) and the above non-aqueous electrolyte solution, a plasticizer may be further added from the viewpoint of increasing the plasticity of the mixed solution and facilitating the molding into the shape of the polymer gel electrolyte. The plasticizer is preferably an organic solvent having a high vapor pressure at a relatively low temperature. Examples of such plasticizers include tetrahydrofuran, methyl tetrahydrofuran, acetone, methyl ethyl ketone, 1,3-dioxolane, cyclohexanone, dimethyl carbonate, diethyl carbonate, and ethyl methyl carbonate. These plasticizers may be used alone or in combination of two or more types.

Furthermore, in the mixing described above, a filler may be further added in addition to the vinylidene fluoride copolymer (A) and the non-aqueous electrolyte solution from the viewpoint of increasing the mechanical strength and heat resistance of the polymer gel electrolyte. Examples of the filler include an inorganic filler such as alumina and fumed silica. These fillers may be used alone or in combination of two or more types.

Note that in the mixing described above, the non-aqueous solvent used in the non-aqueous electrolyte solution and the vinylidene fluoride copolymer (A) may be mixed first, and then the electrolyte may be added to the mixed solution.

In the molding, the mixed solution obtained by the mixing is introduced into a container having a shape (for example, a film shape) of the polymer gel electrolyte, and the mixed solution is preferably cooled at room temperature to obtain a gel-like non-aqueous electrolyte (polymer gel electrolyte).

Note that, when the plasticizer is mixed in addition to the vinylidene fluoride copolymer (A) and the non-aqueous electrolyte solution, it is possible to obtain a polymer gel electrolyte containing the vinylidene fluoride copolymer (A) and the non-aqueous electrolyte solution by volatilizing and removing the plasticizer at a temperature of 0°C or higher and 100°C or lower, and preferably 15°C or higher and 60°C or lower.

Note that, the method for producing the polymer gel electrolyte is not limited to the above method, and a polymer gel electrolyte may be obtained by molding the vinylidene fluoride copolymer (A) into a shape of the polymer gel electrolyte by a known method in advance, and then adding the above non-aqueous electrolyte solution to the molded vinylidene fluoride copolymer (A) and allowing it to swell.

2. Non-aqueous electrolyte secondary battery

The polymer gel electrolyte described above can be disposed between known positive electrode and negative electrode to form a non-aqueous electrolyte secondary battery.

Examples

Hereinafter, specific examples of the present invention will be described together with comparative examples, but the present invention is not limited thereto.

1. Synthesis of vinylidene fluoride copolymer

1-1. Vinylidene fluoride copolymer A-1

An autoclave was charged with 0.2 parts by mass of sodium hydrogen phosphate ($Na_2HPO_4$) and 330 parts by mass of water, and deaerated, and then 1 part by mass of perfluorooctanoic acid (PFOA) ammonium salt and 0.25 parts by mass of ethyl acetate were fed, and then, 28.4 parts by mass of vinylidene fluoride (VDF) and 8 parts by mass of hexafluoropropylene (HFP) were further fed into the autoclave. After heating the mixture to 80°C under stirring, 0.06 parts by mass of ammonium persulfate (APS) was fed to initiate the polymerization. The initial pressure at this time was 3.5 MPa. When the pressure in the autoclave was reduced to 2.5 MPa, 0.3 parts by mass of crosslinkable monomer 1,1,2,2-tetrafluoro-1,2-bis[(trifluorovinyl)oxy]ethane were fed, and 63.3 parts by mass of VDF were continuously charged so that the pressure was maintained. Thereafter, when the pressure dropped to 1.5 MPa, the polymerization reaction was terminated, and the mixture was dried to obtain a powdered vinylidene fluoride copolymer A-1, which is a copolymer of VDF, HFP, and crosslinkable monomer.

1-2. Vinylidene fluoride copolymer A-2

A powdery vinylidene fluoride copolymer A-2, which is a copolymer of VDF, HFP, and a crosslinkable monomer, was obtained by performing the same operation as in the synthesis of the vinylidene fluoride copolymer A-1 except that the amount of the crosslinkable monomer added after the pressure reduction was set to 1 part by mass, and the amount of VDF added thereafter was changed to 91 parts by mass of the VDF used in the polymerization reaction.

1-3. Vinylidene fluoride copolymer A-3

A powdery vinylidene fluoride copolymer A-3, which is a copolymer of VDF, HFP, and a crosslinkable monomer, was obtained by performing the same operation as in the synthesis of the vinylidene fluoride copolymer A-1 except that the amount of the crosslinkable monomer added after the pressure reduction was set to 3 parts by mass, and the amount of VDF added thereafter was changed to 89 parts by mass of the VDF used in the polymerization reaction.

1-4. Vinylidene fluoride copolymer A-4

A powdery vinylidene fluoride copolymer A-4, which is a copolymer of VDF, HFP, and a crosslinkable monomer, was obtained by performing the same operation as in the synthesis of the vinylidene fluoride copolymer A-1 except that the amount of the crosslinkable monomer added after the pressure reduction was set to 5 parts by mass, and the amount of VDF added thereafter was changed to 87 parts by mass of the VDF used in the polymerization reaction.

1-5. Vinylidene fluoride copolymer A-5

A powdery vinylidene fluoride copolymer A-5, which is a copolymer of VDF and HFP, was obtained by performing the same operations as in the synthesis of the vinylidene fluoride copolymer A-1, except that the amount of VDF used in the polymerization reaction was 92 parts by mass instead of adding the crosslinkable monomer after the pressure reduction.

2. Preparation of polymer gel electrolyte

2-1. Polymer gel electrolyte with polymer concentration of 15% by mass

A non-aqueous electrolyte solution was prepared by dissolving lithium hexafluorophosphate ($LiPF_6$) in an amount of 1 mol/L concentration in a non-aqueous solvent obtained by mixing ethylene carbonate and propylene carbonate in an amount such that the mass ratio is 3:2.
7.5 g of any one of vinylidene fluoride copolymer A-1 to vinylidene fluoride copolymer A-5, 100 g of dimethyl carbonate as a plasticizer, and 2.8 g of alumina as an inorganic filler were added into 39.7 g of the above non-aqueous electrolyte solution, and the mixture was stirred under heating to prepare a mixed solution thereof. The obtained mixed solution was put into a circular container and the plasticizer was dried and removed to obtain a polymer gel electrolyte which is a circular film in which the concentration of any one of vinylidene fluoride copolymer A-1 to vinylidene fluoride copolymer A-5 was 15% by mass.

2-2. Polymer gel electrolyte with polymer concentration of 20% by mass

A polymer gel electrolyte, which is a circular film in which the concentration of any one of vinylidene fluoride copolymer A-1 to vinylidene fluoride copolymer A-5 was 20% by mass, was obtained by changing the amount of any one of the non-aqueous electrolyte solution and any one of the vinylidene fluoride copolymer A-1 to the vinylidene fluoride copolymer A-5.

3. Evaluation

3-1. Liquid retention of polymer gel

Each of the obtained polymer gel electrolytes was cut into an appropriate size to prepare a test piece. The mass of these test pieces was measured and used as the mass before pressurization. Each test piece was then pressurized at 30 kPa for 20 minutes.
After pressurization, the liquid component (non-aqueous electrolyte solution) leached on the surface of each test piece was wiped off, the mass of the test piece was measured and used as the mass after pressurization. The ratio of the mass after pressurization to the mass before pressurization (mass after pressurization/mass before pressurization) was calculated and used as the liquid retention (%) of each polymer gel electrolyte.

3-2. Solubility

The solubility was evaluated by the transparency of a polymer solution prepared by adding a vinylidene fluoride copolymer to a non-aqueous electrolyte solution and heating under stirring. A vinylidene fluoride copolymer having a concentration of 10% by mass was added to a propylene carbonate/dimethyl carbonate (1/1) solvent, and the mixture was heated under stirring at 70°C for 30 minutes to prepare a mixed solution. When the solubility of the vinylidene fluoride copolymer is low, solution turbidity due to sedimentation of undissolved matter or dispersion of undissolved matter is observed. The transparency was measured according to the transparency test of JIS K0102. A glass tube with a length of 300 mm and a diameter of 10 mm was used as a measurement instrument at room temperature. It was determined that the vinylidene fluoride copolymer (A) was dissolved at a transparency of 10 degrees or higher. Note that, in a case where the undissolved vinylidene fluoride copolymer (A) was settled and deposited on a bottom surface, the degree of transparency was 0 degree.

A ratio of monomers used in the synthesis of vinylidene fluoride copolymer A-1 to vinylidene fluoride copolymer A-5, the measured liquid retention of polymer gel electrolytes prepared using the vinylidene fluoride copolymer A-1 to the vinylidene fluoride copolymer A-5 and having polymer concentration of 15% by mass and 20% by mass, and the measured solubility (transparency) of the vinylidene fluoride copolymer A-1 to vinylidene fluoride copolymer A-5 in the non-aqueous electrolyte solution are indicated in Table 1.

[Table 1]

| | | Example 1 | Example 2 | Example 3 | Comparative Example 1 | Comparative Example 2 |
|---|---|---|---|---|---|---|
| Vinylidene fluoride copolymer Nos. | | A-1 | A-2 | A-3 | A-4 | A-5 |
| Monomer ratio | VDF | 91.7 | 91 | 89 | 87 | 92 |
| | HFP | 8.0 | 8 | 8 | 8 | 8 |
| | Crosslinkable monomer | 0.3 | 1 | 3 | 5 | - |
| Liquid retention | Polymer concentration: 15% by mass | 93 | 97 | 89 | 80 | 88 |
| | Polymer concentration: 20% by mass | 99 | 99 | 97 | 92 | 93 |
| Solubility (transparency) | | >30 | 26 | 19 | 5 | >30 |

As is clear from Table 1, the polymer gel electrolytes containing the polyvinylidene fluoride copolymer A-1 to the polyvinylidene fluoride copolymer A-3 have high liquid retention for the non-aqueous electrolyte solution. The polyvinylidene fluoride copolymers are copolymers which have a first constituent unit derived from vinylidene fluoride, and a second constituent unit derived from a crosslinkable monomer in which all substitutable hydrogens in the molecule are substituted with fluorine, in which the content of the second constituent unit is 0.1% by mass or more and less than 5% by mass relative to the total mass of the vinylidene fluoride copolymer. In addition, although the polyvinylidene fluoride copolymer A-1 to the polyvinylidene fluoride copolymer A-3 are crosslinked by using a crosslinkable monomer in the synthesis, it has a high solubility in the non-aqueous electrolyte solution and can be dissolved in the non-aqueous electrolyte solution after the crosslinking to produce a polymer gel electrolyte.

Note that, when a vinylidene fluoride copolymer was produced in the same manner as in the synthesis of vinylidene fluoride copolymer A-1 except that 1,2-bis(vinyloxy)ethane was used as the crosslinkable monomer, polymerization did not proceed sufficiently.

The present application claims priority to JP 2018-046760 A filed on March 14, 2018.

Industrial Applicability

Since the polymer gel electrolyte of an embodiment of the present invention has a high liquid retention for the non-aqueous electrolyte solution, and it can be prepared by dissolving the polymer after crosslinking in the non-aqueous electrolyte solution, the non-aqueous electrolyte secondary battery is easily produced. Therefore, according to the present invention, it is expected that the non-aqueous electrolyte secondary battery can be produced more easily while further improving the durability of the non-aqueous electrolyte secondary battery, thereby contributing to the progress and spread of the technology in the same field.

**Claims**

1. A polymer gel electrolyte comprising:

   a vinylidene fluoride copolymer having a first constituent unit derived from vinylidene fluoride and a second constituent unit derived from a crosslinkable monomer; and
   a non-aqueous electrolyte solution,
   wherein in the vinylidene fluoride copolymer, the second constituent unit is a constituent unit that has two or more polymerizable functional groups and a linking group connecting the functional groups to each other, the linking group having a valence that is the same as the number of the functional groups, and that is derived from a crosslinkable monomer in which all substitutable hydrogens in a molecule are substituted with fluorine, and a content of the second constituent unit is 0.1% by mass or more and less than 5% by mass relative to the total mass of the vinylidene fluoride copolymer.

2. The polymer gel electrolyte according to claim 1,
   wherein the vinylidene fluoride copolymer is a vinylidene fluoride copolymer in which the second constituent unit is a constituent unit derived from a crosslinkable monomer having a plurality of polymerizable functional groups selected from the group consisting of a vinyl group in which all hydrogen atoms are substituted with fluorine atoms, and a functional group represented by RR'C=CR"-CO-, where R, R', and R" independently represent a fluorine atom or a linear or branched perfluoroalkyl group having from 1 to 5 carbon atoms.

3. The polymer gel electrolyte according to claim 1 or 2, wherein the vinylidene fluoride copolymer is a vinylidene fluoride copolymer in which the second constituent unit is a constituent unit derived from a crosslinkable monomer having a structure with a plurality of polymerizable functional groups connected to each other by a linking group containing a heteroatom.

4. The polymer gel electrolyte according to any one of claims 1 to 3, wherein the vinylidene fluoride copolymer is a vinylidene fluoride copolymer in which transparency, measured according to Japanese Industrial Standard (JIS) K0102, of a mixed solution prepared by adding 10% by mass of the vinylidene fluoride copolymer to the non-aqueous electrolyte solution is 10 degrees or higher.

5. The polymer gel electrolyte according to any one of claims 1 to 3,
   wherein the non-aqueous electrolyte solution is an electrolyte solution in which an electrolyte is dissolved in a non-aqueous solvent selected from the group consisting of propylene carbonate, ethylene carbonate, dimethyl carbonate, diethyl carbonate, and methyl ethyl carbonate.

6. The polymer gel electrolyte according to any one of claims 1 to 5,
   wherein the non-aqueous electrolyte solution is an electrolyte solution in which an electrolyte selected from the group consisting of $LiPF_6$, $LiAsF_6$, $LiClO_4$, $LiBF_4$, $LiCl$, $LiBr$, $LiCH_3SO_3$, $LiCF_3SO_3$, $LiN(CF_3SO_2)_2$, and $LiC(CF_3SO_2)_3$ is dissolved in a non-aqueous solvent.

7. A non-aqueous electrolyte secondary battery comprising:

   a positive electrode;
   a negative electrode; and
   a polymer gel electrolyte described in any one of claims 1 to 6, disposed between the positive electrode and the negative electrode.

**Patentansprüche**

1. Polymergelelektrolyt, umfassend:

   ein Vinylidenfluoridcopolymer mit einer ersten Bestandteileinheit, die von Vinylidenfluorid abgeleitet ist, und einer zweiten Bestandteileinheit, die von einem vernetzbaren Monomer abgeleitet ist; und
eine nichtwässrige Elektrolytlösung,
wobei in dem Vinylidenfluoridcopolymer die zweite Bestandteileinheit eine Bestandteileinheit ist, die zwei oder mehr polymerisierbare funktionelle Gruppen und eine Verknüpfungsgruppe aufweist, die die funktionellen Gruppen miteinander verbindet, wobei die Verknüpfungsgruppe eine Valenz aufweist, die gleich der Anzahl der funktionellen Gruppen ist, und die von einem vernetzbaren Monomer abgeleitet ist, in dem alle substituierbaren Wasserstoffe in einem Molekül mit Fluor substituiert sind, und
ein Gehalt der zweiten Bestandteileinheit 0,1 Gew.-% oder mehr und weniger als 5 Gew.-% bezogen auf die Gesamtmasse des Vinylidenfluoridcopolymers beträgt.

2. Polymergelelektrolyt nach Anspruch 1,
wobei das Vinylidenfluoridcopolymer ein Vinylidenfluoridcopolymer ist, in dem die zweite Bestandteileinheit eine Bestandteileinheit ist, die von einem vernetzbaren Monomer mit einer Vielzahl von polymerisierbaren funktionellen Gruppen abgeleitet ist, ausgewählt aus der Gruppe bestehend aus einer Vinylgruppe, in der alle Wasserstoffatome durch Fluoratome substituiert sind, und einer funktionellen Gruppe, die durch RR'C=CR"-CO- dargestellt ist, wobei R, R' und R" unabhängig ein Fluoratom oder eine lineare oder verzweigte Perfluoralkylgruppe mit 1 bis 5 Kohlenstoffatomen darstellen.

3. Polymergelelektrolyt nach Anspruch 1 oder 2, wobei das Vinylidenfluoridcopolymer ein Vinylidenfluoridcopolymer ist, in dem die zweite Bestandteileinheit eine Bestandteileinheit ist, die von einem vernetzbaren Monomer abgeleitet ist, das eine Struktur mit einer Vielzahl von polymerisierbaren funktionellen Gruppen aufweist, die durch eine Verknüpfungsgruppe, die ein Heteroatom enthält, miteinander verbunden ist.

4. Polymergelelektrolyt nach einem der Ansprüche 1 bis 3, wobei das Vinylidenfluoridcopolymer ein Vinylidenfluoridcopolymer ist, in dem Transparenz, gemessen gemäß der japanischen Industrienorm (JIS) K0102, einer Mischlösung, die durch Zugabe von 10 Masse-% Vinylidenfluoridcopolymer zu der nichtwässrigen Elektrolytlösung hergestellt wird, 10 Grad oder höher beträgt.

5. Polymergelelektrolyt nach einem der Ansprüche 1 bis 3,
wobei die nichtwässrige Elektrolytlösung eine Elektrolytlösung ist, in der ein Elektrolyt in einem nichtwässrigen Lösungsmittel gelöst ist, ausgewählt aus der Gruppe bestehend aus Propylencarbonat, Ethylencarbonat, Dimethylcarbonat, Diethylcarbonat und Methylethylcarbonat.

6. Polymergelelektrolyt nach einem der Ansprüche 1 bis 5,
wobei die nichtwässrige Elektrolytlösung eine Elektrolytlösung ist, in der ein Elektrolyt, ausgewählt aus der Gruppe bestehend aus $LiPF_6$, $LiAsF_6$, $LiClO_4$, $LiBF_4$, LiCl, LiBr, $LiCH_3SO_3$, $LiCF_3SO_3$, $LiN(CF_3SO_2)_2$ und $LiC(CF_3SO_2)_3$, in einem nichtwässrigen Lösungsmittel gelöst ist.

7. Sekundärbatterie mit nichtwässrigem Elektrolyten, umfassend:

eine positive Elektrode;
eine negative Elektrode; und
einen Polymergelelektrolyten, der in einem der Ansprüche 1 bis 6 beschrieben ist, der zwischen der positiven Elektrode und der negativen Elektrode angeordnet ist.

**Revendications**

1. Électrolyte en gel polymère comprenant :

un copolymère de fluorure de vinylidène ayant un premier motif constituant dérivé de fluorure de vinylidène et un deuxième motif constituant dérivé d'un monomère réticulable ; et
une solution électrolytique non aqueuse,
dans lequel dans le copolymère de fluorure de vinylidène, le deuxième motif constituant est un motif constituant qui a deux groupes fonctionnels polymérisables ou plus et un groupe de liaison connectant les groupes fonctionnels les uns aux autres, le groupe de liaison ayant une valence qui est la même que le nombre des groupes fonctionnels, et qui est dérivé d'un monomère réticulable dans lequel tous les hydrogènes substituables dans une molécule sont substitués par du fluor, et

une teneur du deuxième motif constituant est de 0,1 % en masse ou plus et inférieure à 5 % en masse par rapport à la masse totale du copolymère de fluorure de vinylidène.

2. Électrolyte en gel polymère selon la revendication 1, dans lequel le copolymère de fluorure de vinylidène est un copolymère de fluorure de vinylidène dans lequel le deuxième motif constituant est un motif constituant dérivé d'un monomère réticulable ayant une pluralité de groupes fonctionnels polymérisables choisis dans le groupe constitué d'un groupe vinyle dans lequel tous les atomes d'hydrogène sont substitués par des atomes de fluor, et un groupe fonctionnel représenté par RR'C=CR''-CO-, où R, R', et R'' représentent indépendamment un atome de fluor ou un groupe perfluoroalkyle linéaire ou ramifié ayant de 1 à 5 atomes de carbone.

3. Électrolyte en gel polymère selon la revendication 1 ou 2, dans lequel le copolymère de fluorure de vinylidène est un copolymère de fluorure de vinylidène dans lequel le deuxième motif constituant est un motif constituant dérivé d'un monomère réticulable ayant une structure avec une pluralité de groupes fonctionnels polymérisables connectés les uns aux autres par un groupe de liaison contenant un hétéroatome.

4. Électrolyte en gel polymère selon l'une quelconque des revendications 1 à 3, dans lequel le copolymère de fluorure de vinylidène est un copolymère de fluorure de vinylidène dans lequel la transparence, mesurée selon la norme industrielle japonaise (JIS) K0102, d'une solution mélangée préparée en ajoutant 10 % en masse du copolymère de fluorure de vinylidène à la solution électrolytique non aqueuse est de 10 degrés ou plus.

5. Électrolyte en gel polymère selon l'une quelconque des revendications 1 à 3, dans lequel la solution électrolytique non aqueuse est une solution électrolytique dans laquelle un électrolyte est dissous dans un solvant non aqueux choisi dans le groupe constitué de carbonate de propylène, carbonate d'éthylène, carbonate de diméthyle, carbonate de diéthyle, et carbonate de méthyl-éthyle.

6. Électrolyte en gel polymère selon l'une quelconque des revendications 1 à 5, dans lequel la solution électrolytique non aqueuse est une solution électrolytique dans laquelle un électrolyte choisi dans le groupe constitué de $LiPF_6$, $LiAsF_6$, $LiClO_4$, $LiBF_4$, LiCl, LiBr, $LiCH_3SO_3$, $LiCF_3SO_3$, $LiN(CF_3SO_2)_2$, et $LiC(CF_3SO_2)_3$ est dissous dans un solvant non aqueux.

7. Batterie secondaire à électrolyte non aqueux comprenant :

une électrode positive ;
une électrode négative ; et
un électrolyte en gel polymère décrit dans l'une quelconque des revendications 1 à 6, disposé entre l'électrode positive et l'électrode négative.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3429017 A1
- US 5429891 A
- JP 11003717 A
- JP 11096832 A
- JP 9302134 A
- JP 2018046760 A